# EUROPÄISCHE PATENTANMELDUNG

(11) **EP 0 733 691 A2**
(43) Veröffentlichungstag der Anmeldung: **25.09.1996**
(21) Anmeldenummer: 96101022.0
(22) Anmeldetag: 25.01.1996
(51) Int. Cl.: C09J 167/00, C09J 177/00, A41D 27/06

(54) **Schmelzklebermasse zur Beschichtung von Einlagenstoff**

(30) Priorität: 22.03.1995 DE 19510315
(71) Anmelder: HÜLS AKTIENGESELLSCHAFT, D-45764 Marl (DE)
(72) Erfinder: Simon, Ulrich, D-44623 Herne (DE); Hahn, Siegfried, D-53773 Hennef-Stossdorf (DE)

(57) **Zusammenfassung**

Schmelzklebermassen zum Beschichten von textilen Flächengebilden zeigen Probleme hinsichtlich der Wasch- und Reinigungsbeständigkeit. Durch den erfindungsgemäßen Einsatz eines Epoxides zur Schmelzklebermasse können reinigungsbeständige Verbundstoffe mit besonders hoher Waschbeständigkeit hergestellt werden.

## Beschreibung

Die Erfindung betrifft eine Schmelzklebermasse zum Beschichten von Flächengebilden, beispielsweise von Textilien, Leder, Schaumstoffen oder Kunststoffolien. Insbesondere betrifft die Erfindung eine Schmelzklebermasse zum rasterförmigen Beschichten von fixierbaren Einlagenstoffen für die Bekleidungsindustrie, speziell Oberbekleidung.

Es sind Schmelzklebermassen bekannt, die vorzugsweise in Form einer wäßrigen Paste rasterförmig auf ein zu beschichtendes Flächengebilde aufgebracht werden. Anschließend wird getrocknet und gesintert. Das gesinterte Produkt stellt die Schmelzklebermasse dar. Die beschichteten Flächengebilde werden in Bahnform oder als Zuschnitte mit anderen bahnenförmigen oder zugeschnittenen Flächengebilden unter Einwirkung von Druck und vergleichsweise milder Temperatur zu reinigungsbeständigen Verbundstoffen mit besonders hoher Waschbeständigkeit und Haftung laminiert.

Es sind zahlreiche Schmelzklebermassen mit reinigungsbeständigen Eigenschaften für das Siebdruckverfahren bekannt. Diese sind hauptsächlich aus wäßrig-pastösen Mischungen aus Schmelzkleberfeinpulvern gebildet, welche auch in gröberer Kornform für sich alleine direkt zum Beschichten im Streu- oder Pulverpunktverfahren aufgetragen werden können. Die heute meistens eingesetzten reinigungsbeständigen Schmelzklebermassen basieren auf Copolyamiden, Copolyestern oder Niederdruck-Polyethylen. Andere, ebenfalls verwendete Schmelzklebermassen sind nicht reinigungsbeständig.

Zum Anteigen der Schmelzkleberfeinpulver zur Herstellung der Haftschicht werden spezielle Suspendier- bzw. Dispergiermittel benutzt, die den Anteigungen eine saubere Druckfähigkeit verleihen, ohne aber die Reinigungsbeständigkeit zu reduzieren. Daneben sollen Dispergiermittel noch besondere Eigenschaftsmerkmale hervorrufen, beispielsweise die Verhinderung einer Sedimentation der eingemischten Pulver, eine konturenscharfe Ausbildung des Druckes, eine gesteuerte Penetration der Schmelzkleberpaste, eine Verhinderung des Durchschlages durch den Oberstoff, die Vermeidung eines Rückschlages beim Fixieren oder die Ausschaltung der Kantenverschweißung beim Zuschneiden der Flachengebilde. Derartige Dispergiermittel sind beispielsweise in den Patentschriften DE-B 20 07 971, DE-B 22 29308, DE-B-24 07 505, DE-B 25 07 504 und DE-B-35 10 109 beschrieben worden. Den Dispergiermitteln können Weichmacher beigefügt sein. Häufig werden noch Additive aus hochmolekularem Polyethylenoxid zugefügt, wodurch die Lauffähigkeit der Paste erhöht wird.

Zum rasterförmigen Beschichten im Siebdruckverfahren werden Siebdruckschablonen benutzt, die in regelmäßiger oder unregelmäßiger Anordnung Perforationen besitzen, durch die Schmelzklebermassen mit einer Innenrakel auf den Einlagenstoff aufgedruckt werden. Während früher Siebschablonen mit vergleichsweise weitem Abstand und großen Öffnungen, z. B. 17 Mesh, benutzt wurden, werden in jüngerer Zeit immer mehr feinere Beschichtungen mit enger Aneinanderreihung kleinerer Öffnungen, z. B. 30 Mesh, unter Ausbildung eng nebeneinanderliegender kleiner Schmelzkleberpunkte durchgeführt. Außerdem sind die Einlagestoffe leichter, feiner und offener geworden. Mit der Verfeinerung der Raster ist die Beschichtungsproblematik gewachsen, und gleichzeitig haben die Reinigungs- und Waschprobleme zugenommen, da die größere Rasteranordnung mit größeren Einzelpunkten eine höhere Haftfestigkeit erzeugte als die feinere Rasteranordnung mit kleineren Einzelpunkten.

Aber auch die Verwendung von Einlagenstoffen hat eine graduelle Änderung erfahren. Aus modischen und wohl auch aus Umweltschutzgründen werden immer mehr Einlagenstoffe in Kleidungsstücken verwendet, die eher gewaschen als gereinigt werden, so beispielsweise Einlagen für Freizeitbekleidung.

Dieser Trendwandel hat dazu geführt, daß die ursprünglich für Oberbekleidungsstücke ausschließlich verwendeten Copolyamid-Schmelzkleber mehr und mehr durch Copolyester ersetzt worden sind, da Copolyester zwar nicht die besonders gute chemische Reinigungsfestigkeit der Copolyamide aufweisen, aber eine bessere Waschbeständigkeit besitzen. Niederdruck-Polyethylene scheiden wegen der zu hohen Fixiertemperaturen aus.

Kosten und Qualitätsgründe haben dazu geführt, daß die Beschichtungsmenge, die pro m² Einlagenstoff aufgebracht wird, deutlich reduziert wurde.

Während frühere Auftragsmengen von 18 bis 25 g/m² üblich waren, liegen diese heute bei 7 bis 15 g/m², das kam dem Bedürfnis nach einem weichen, fließendem Fall der fixierten Kleidungsstücke nach.

Um die Probleme hinsichtlich der reduzierten Wasch- und Reinigungsbeständigkeit sowie hinsichtlich der schwächeren Haftung zu lösen, sind verbesserte Schmelzklebermassen, aber auch verbesserte Beschichtungstechnologien entwickelt worden. Duo- oder Doppelpunktbeschichtungen sind z. B. in den Patenten DE-B 22 14 236, DE-B 22 31 723, DE-B 25 36 911 und DE-B 32 30 579 beschrieben. Außerdem ist in den Patentschriften EP-A 0 219 376 und EP-A 0 365 711 eine Indirekt-Beschichtungsmethode beschrieben.

Die Beschichtungsträger wurden dadurch verbessert, daß feinere Garne mit feintitrigeren Einzelfasern bis hin zum Microfaserbereich sowie Synthetikgarne, beispielsweise Hochbauschacrylgarne und gekräuselte Polyestergarne verwendet wurden. Außerdem sind die ursprünglich verwendeten Gewebe durch andere Flächengebilde abgelöst worden, z. B. durch Webwirkwaren oder durch Webwirk- und Wirkvliese, wobei diese zuletzt genannten Stoffe eine Kombination aus Vliesen mit Wirkwaren darstellen.

Als weiterhin bestehender Mangel wird insbesondere eine Versteifung sowie eine erhöhte Knitteranfälligkeit eines Fixierverbundes aus Einlage und Oberstoff, insbesondere bei Feinrasterbeschichtungen, angesehen. Ganz besonders wird aber als negativ angesehen, daß bei feinbeschichteten Einlagenstoffen auf feinen Oberstoffen, beispielsweise Blusenoberstoffen, die Waschbeständigkeit des Fixierverbundes trotz der Verwendung von Polyestern nur mäßig und vielfach sogar mangelhaft ist. Es besteht also weiterhin ein erhebliches Bedürfnis nach einer unter milden, heute üblichen Fixiertemperaturen aufbügelbaren Einlage mit geringerem Beschichtungsgewicht, die einen weichen Fixiergriff vermittelt, einwandfrei waschbar ist und nach dem Waschprozeß eine hohe Haftfestigkeit beibehält.

Ein großer Bedarf für solche Einlagen besteht in der Damenoberbekleidungskonfektion. Besonders hier werden modeabhängig sehr fixierunfreundliche Oberstoffe wie Seide, Polyester-Viskose-Georgette und silikonisierte oder fluorcarbonisierte Oberstoffe verarbeitet. Mit den gängigen Einlagen werden recht gute Primärhaftungen erzielt, nach Wäschen oder Reinigung kommt es aber zu vollständigen Ablösungen.

Selbst aufwendige Beschichtungsmethoden wie das traditionelle Doppelpunkt- und Indirekt-Beschichtungsverfahren bringen hier kaum Erfolg.

Der Erfindung liegt daher die Aufgabe zugrunde, eine Schmelzklebermasse zu finden, die bei verminderter Beschichtungsmenge eine hohe Haftfestigkeit sowie eine hervorragende Wasch- und Reinigungsbeständigkeit aufweist. Die Haftmasse soll auf Vliesen, Charmeusen und Webwirk-Wirkwaren appliziert werden, vornehmlich auf Einlagen mit Gewichten von 15 bis 40 g/m², bevorzugt Einlagen, die mit Silikonen oder Silikonweichmachern vorbehandelt sind. Die Schmelzklebermasse soll dabei besonders für die Doppelpunktbeschichtung anwendbar sein.

Es wurde nun überraschend gefunden, daß eine Schmelzklebermasse, bestehend aus einer Basisschicht aus Copolyamid und Niederdruck-Polyethylen und einer darauf aufsitzenden Deckschicht, bestehend aus einem thermoplastischen Schmelzkleber und einem Epoxid, diese Forderung erfüllt. Der Epoxidanteil in der Deckschicht beträgt dabei 5 bis 25 Gew.-%. Der thermoplastische Schmelzkleber in der Deckschicht kann dabei aus einem Copolyester, einem Copolyamid oder aus beiden Komponenten bestehen. Als Epoxid eignen sich Epoxide auf Basis von Bisphenol-A-Epoxid besonders. Das Epoxid hat vorzugsweise einen Schmelzpunkt von 65 bis 110 °C, besonders bevorzugt einen Schmelzpunkt von 95 bis 110 °C, ein Epoxidäquivalent von 450 bis 6 000 g/equiv., vorzugsweise von 2 400 bis 4 000 g/equiv. und eine Korngröße von 1 bis 80 µm. Der Anteil an Epoxid beträgt 5 bis 25 Gew.-%, bezogen auf das Trockengewicht der Deckschicht. Die Deckschicht kann folgende Zusammensetzungen haben: 0 bis 25 Gew.-% Copolyamid, 50 bis 95 Copolyester und 5 bis 25 Gew.-% Epoxid.

Die Schmelzklebermasse wird erfindungsgemäß bei der Doppelpunktbeschichtung vorzugsweise so auf den zu beschichtenden Gegenstand, beispielsweise einen Einlagenstoff für ein Bekleidungsstück aufgebracht, daß zunächst eine Schmelzkleberpaste als Basisschicht im Siebdruckverfahren aufgebracht wird. Diese Basis enthält als Klebemasse eine Mischung aus Niederdruckpolyethylen und einem handelsüblichen hochschmelzenden Copolyamid im Verhältnis 60 : 40. Darauf wird eine Ober- bzw. Deckschicht aufgebracht. Als Deckschicht eignet sich insbesondere ein Schmelzkleberpulver, das aufgestreut wird. Nach dem Aufstreuen wird der Einlagenstoff in Vibration versetzt und anschließend wird das nicht an der Basisschicht anhaftende Pulver entfernt.

Die erfindungsgemäße Deckschicht besteht aus einem niedrig schmelzenden Copolyamid mit einem Anteil an Bisphenol-A-Epoxid oder einem niedrigschmelzenden Copolyester mit einem Anteil an Bisphenol-A-Epoxid.

Zum Anteigen der Mischung aus Copolyamid oder Copolyester und Niederdruck-Polyethylen für die Basisschicht werden Dispergiermittel benutzt. Als Beispiel seien solche genannt, die in den eingangs erwähnten Patentschriften, DE-B 20 07 971, DE-B 22 29 308, DE-B 24 07 505 und DE-B-35 10 109, beschrieben sind, auf die hier ausdrücklich Bezug genommen wird. Besonders eignen sich Dispergiermittel auf Basis ethoxilierter Fettalkohole mit 12 bis 18 C-Atomen in der Kette und Ethoxilierungsgraden von 3 bis 5 mit einem Andickungsmittel auf Polyacryl- bzw. Polymethacrylsäurebasis, die in der nassen Schmelzkleberpaste in einem Anteil von 0,5 bis 2 Gew.-%, eingesetzt werden. Der Trockenanteil der Schmelzkleberpaste beträgt vorzugsweise 30 bis 50 Gew.-%.

Die Deckschicht der erfindungsgemäßen Schmelzklebermasse besteht, vorzugsweise aus eines handelsüblichen Copolyamid oder Copolyester. Besonders bevorzugt ist dabei, wie sich überraschenderweise herausgestellt hat, eine Mischung aus einem Bisphenol-A-Epoxid und eines niedrig schmelzenden Copolyester oder einer Mischung aus einem Bisphenol-A-Epoxid und einem Copolyamid. Vorzugsweise wird die Deckschicht auf die Basisschicht gestreut, wobei das Material der Deckschicht eine Pulvermischung ist. Die Mischung hat überwiegend einen Kornbereich von 80 bis 160 µm.

Die in der Pulvermischung enthaltenen Copolyamide oder Copolyester sind handelsübliche Produkte z. B. VESTAMELT X 7352, VESTAMELT 730, VESTAMELT 4581 der Hüls AG. Entscheidend für die erfindungsgemäße Anwendung ist der Anteil an Bisphenol-A-Epoxid.

### Beispiel für Doppelpunktbeschichtungen

Die Deckschicht der erfindungsgemäßen Schmelzklebermasse enthält vorzugsweise ein Copolyamid, Copolyester oder Mischungen davon. Besonders bevorzugt ist dabei, wie sich überraschenderweise herausstellte, die Verwendung einer Mischung aus Copolyester mit einem Bisphenol-A-Epoxid oder einer Mischung aus Copolyamid und einem Bisphenol-A-Epoxid. Vorzugsweise wird die Deckschicht auf die Basisschicht aufgestreut, wobei die Deckschicht ein Pulver ist. Die Mischung hat überwiegend einen Kornbereich von 80 bis 160 µm. Bei der zweischichtigen Beschichtung aus Schmelzkleberpaste und Pulver beträgt das Gewichtsverhältnis von Schmelzklebertrockenpaste (trocken) zu Deckschichtpulver etwa 1 : 1.

Die Schmelzkleberpaste, die als Basisschicht verwendet wird, hat folgende Zusammensetzung:

| | |
|---|---|
| Wasser | 6,30 Gew.-Teile |
| Mirox HP | 0,15 Gew.-Teile (Polyacrylsäurederviat) |
| INTRASOL 1218/5 | 0,30 Gew.-Teile (ethoxilierter Fettalkohol) |
| VESTAMELT 751-P1 | 1,00 Gew.-Teile |
| Schättifix 1820-P1 | 1,50 Gew.-Teile |

Als Copolyamid wird das VESTAMELT 751-P1 der Hüls AG eingesetzt:

### VESTAMELT 751-P1

| | |
|---|---|
| Korngröße | 1 bis 80 µm |
| Schmelzindex (160 °C, 21,6 N) | 14 g/10 min |
| Fp Schmelzröhrchen | 108 °C |
| Fp DSC | 98 °C |

Das zur Herstellung der Paste verwendete Niederdruck-Polyethylen ist wie folgt definiert:

### ND-Polyethylen: Schättifix 1820-P1

| | |
|---|---|
| Korngröße | 1 bis 80 µm |
| Schmelzindex (190 °C, 21,6 N) | 20 g/10 min |
| Schmelzpunkt | 130 °C |
| Hersteller Schätti, CH | |

Die Pastenadditive werden in der obengenannten Reihenfolge zusammengerührt. Die Paste wird durch die Perforation einer 25 Mesh Siebschablone mit regelmäßiger Punktanordnung auf einem Beschichtungsträger mittels Innenrakel aufgebracht. Der Beschichtungsträger ist ein Wirkvlies von 30 g/m² aus PES/PA-Fasern (30 : 70). Das Vlies ist mit PES-Multifilkettfäden durchwirkt. Der Pastenauftrag beträgt ca. 5 bis 6 g/m² trocken. Nach dem Beschichten wird die nasse Basisschicht mit der erfindungsgemäßen Pulvermischung aus Copolyester und Epoxid bestreut.

Die Deckschicht ist eine Mischung aus dem Copolyester VESTAMELT 4581 (90 Gew.-%) und einem Bisphenol-A-Epoxid (10 Gew.-%) mit einem Epoxid-Äquivalent von 2 400 bis 4 000 und einem Erweichungspunkt (Kofler) von 100 bis 110 °C. Der Streuauftrag beträgt ca. 5 bis 6 g/m².

Nach dem Bestreuen der Basisschicht wird das Vlies mit einem schnell rotierenden Schlägerwerk in Vibration versetzt. Das nicht auf der nassen Basisschicht haftende Pulver wird durch Abblasen und Absaugen entfernt. Anschließend wird getrocknet und gesintert. Die fertige Einlage wird anschließend gegen einen Oberstoff fixiert und die Haftfestigkeit gemessen.

### Vergleichsbeispiel

Als Vergleichsbeispiel wird die Basisschicht in obengenannter Weise appliziert. Als Deckschicht wird jedoch nur der Copolyester ohne Epoxid aufgestreut. Nach Absaugung, Trocknung und Sinterung werden Haftmessungen durchgeführt.

### Auswertung:

| **Probe aus** | **Oberstoff** | **nach Fixieren** | **1 x 40 °C Wäsche** | **3 x CR** |
|---|---|---|---|---|
| Beispiel | Seide | 6,5 | 5,5 | 6,5 |
| | Polyester-Georgette | 5,8 | 4,5 | 6,0 |
| Vergleichsbsp. Stand der Technik | Seide | 4,0 | 0,8 | abgefallen |
| | Polyester-Georgette | 2,5 | 0,3 | abgefallen |

Die erfindungsgemäße Einlage mit Epoxid zeigt nach Wäsche und Reinigung eine deutlich bessere Haftung auf schwierig zu fixierenden Oberstoffen. Ganz kraß ist der starke Abfall der Haftwerte nach Wäsche und Reinigung.

## Patentansprüche

1. Schmelzklebermasse als Oberpunkt (Streupunkt) für das Doppelpunktverfahren bei der Beschichtung von Flächengebilden, insbesondere von Einlagenstoffen,
dadurch gekennzeichnet,
daß die Deckschicht aus einem oder mehreren thermoplastischen Schmelzklebern und einem Epoxid besteht, wobei der Epoxid-Anteil in der Deckschicht 5 bis 25 Gew.-% beträgt.

2. Schmelzklebermasse nach Anspruch 1,
dadurch gekennzeichnet,
daß die Deckschicht eine Mischung aus Copolyamid und/oder Copolyester und Epoxid enthält.

3. Schmelzklebermasse nach den Ansprüchen 1 und 2,
dadurch gekennzeichnet,
daß das Verhältnis der Deckschicht-Bestandteile im folgenden Bereich liegt:
0 bis 25 Gew.-% Copolyamid
50 bis 95 Gew.-% Copolyester
5 bis 25 Gew.-% Epoxid.

4. Schmelzklebermasse nach den Ansprüchen 1 bis 3,
dadurch gekennzeichnet,
daß als Epoxid ein Bisphenol-A-Epoxid eingesetzt wird.

5. Schmelzklebermasse nach Anspruch 4,
dadurch gekennzeichnet,
daß das Bisphenol-A-Epoxid einen Schmelpunkt von 65 bis 110 °C, ein Epoxidäquivalent von 450 bis 6 000 g/equiv. und eine Korngröße von 1 bis 80 µm aufweist.

6. Schmelzklebermasse nach Anspruch 5,
dadurch gekennzeichnet,
daß das Bisphenol-A-Epoxid einen Schmelzpunkt von 95 bis 110 °C, ein Epoxidäquivalent speziell von 2 400 bis 4 000 g/equiv. und eine Korngröße von 1 bis 80 µm aufweist.

7. Verwendung der Schmelzklebermasse nach den Ansprüchen 1 bis 6 zur Beschichtung von Flächengebilden, insbesondere Einlagestoffen für Oberbekleidung.

8. Einlagestoff für die Bekleidung,
dadurch gekennzeichnet,
daß er mit einer Schmelzklebermasse nach einem der Ansprüche 1 bis 7 versehen ist.
